# EUROPEAN PATENT APPLICATION

(11) **EP 2 091 046 A1**
(43) Date of publication of application: **19.08.2009**
(21) Application number: 08300095.0
(22) Date of filing: 15.02.2008
(51) Int. Cl.: G11B 27/036, G11B 27/038, G11B 27/10, G11B 27/34, G06F 17/30, G09G 5/377, H04N 5/232

(54) **Presentation system and method for controlling the same**

(71) Applicant: Thomson Licensing, 92100 Boulogne-Billancourt (FR)
(72) Inventor: Shauchenka, Aliaksei, 64285 Darmstadt (DE); Wagner, Andrej, 65183 Wiesbaden (DE); Mann, Matthias, 64560 Riedstadt (DE)
(74) Representative: Lindemann, Robert

(57) **Abstract**

A presentation system includes a video mixer and a computer. The video mixer has a plurality of video signal inputs and at least a video signal output. The computer is adapted to run presentation software. A control interface connects the computer to the video mixer. A source of a video signal is connected to an input of the video mixer. The computer is adapted to detect the occurrence of events in the presentation software. A detected event is linked to a mix effect that can be performed by the video mixer. The computer is adapted to transmit control commands and/or parameters to the video mixer upon detecting an event corresponding to a linked mix effect. The computer may further be adapted to receive signals from the video mixer indicating termination of an effect or a video sequence.

## Description

The invention relates to a presentation system and a method for controlling the same.

Presentations held to larger audiences for all purposes nowadays often include presentation slides prepared with presentation software such as PowerPoint ^{®} (a registered mark of Microsoft ^{®} Corporation) or similar software from other software makers. Often also video sequences are presented in the course of a presentation. The presentation as well as the video sequence are typically projected on a screen or reproduced by a sufficiently large display device. When a video sequence is to be inserted at a certain point in the presentation, in a single display configuration, either the presenter or an operator has to switch inputs of the display device and start reproduction of the video sequence. After the end of the video sequence the input of the display device has to be switched back to the presentation software. In case of a multi-display configuration still the reproduction of the video has to be started and terminated. Having the presenter operate the video reproduction can be cumbersome and may not look professional. If an operator takes care of controlling the display's content he or she either can follow a fixed timed sequence or needs to receive signs or commands from the presenter. Fixed timed sequences have proven inadequate for live presentations, e.g. due to interruptions of the presentation by questions from the audience and the like. If the operator needs to observe signs or commands from the presenter, reviewing a video sequence in case the presenter stepped back for a number of slides can be difficult, because, depending upon the number of video sequences that are contained in the presentation, it may be difficult to select and start the correct video sequence for a particular slide. Further, the operator may miss a sign from the presenter and cause a delay in the presentation.

US2002/0186233 discloses a script-controlled video switcher. In the known video switcher transaction macros are controlled by operating mouse or keyboard controls. Each video production command in a transaction macro directs the processing unit to transmit in series and/or parallel one or more control commands to one or more of the video production devices when required. However, the script needs to be written beforehand, including all timing information, and execution thereof is controlled manually.

US 6,836,870 B2 discloses a plug-in-control of media content by PowerPoint ^{®} software. A user command is intercepted and a second window is controlled via a Windows ^{®} (a registered mark of Microsoft ^{®} Corporation) COM-Server-Object. However, the second window has limited capability as to include external video sources, mix and transition effects and the like. Any content in the second window must be prepared and processed in the desired way beforehand and accessible from the computer that runs the presentation. Also, any kind of video codec that is required for reproducing the content in the second window must be installed on the computer that runs the presentation, and the computational power must be sufficiently high to run both, the presentation software as well as the video in the second window. The latter can pose enormous problems in case high definition video content is inserted, and even more so in case trick effects are to be applied on the video content.

The Proxima 5800/6800-series LCD video projector allows for controlling an input source that is reproduced via an RS232 protocol. However, the projector provides no capability for video effects. Further, the projector cannot return a control signal indicating the end of a video sequence.

It is, therefore, desirable to provide a presentation system and a method for operating the same which overcomes the above-mentioned problems and provides enhanced convenience and reliability of operation.

A presentation system according to one aspect of the invention includes a video mixer. The video mixer has a plurality of video signal inputs and at least a video signal output. The presentation system further includes a computer, e.g. a general purpose computer, adapted to run presentation software. A control interface connects the general purpose computer to the video mixer. A source of a video signal is connected to an input of the video mixer. The presentation system is characterised in that the general purpose computer is adapted to detect the occurrence of events in the presentation software. A detected event is linked to a mix effect that can be performed by the video mixer. The general purpose computer is adapted to transmit control commands and/or parameters to the video mixer upon detecting an event corresponding to a linked mix effect.

In one embodiment the detection of the occurrence of events in the presentation software is provided by a plug-in that monitors or polls an application programming interface (API) of the presentation software or an operating system under which the presentation software is running. The detectable events include, for example, entering a presentation slide, leaving a presentation slide, or operation of a real or virtual key or button. It is obvious that the afore-mentioned list is non-inclusive, and other events may be monitored and used for triggering mix effects in the video mixer.

The parameters that are transmitted to the video mixer for controlling the output of the video mixer include the position and/or size of a video insert, transition effects, mix effects, luminance or chrominance keying, the duration of an effect or the duration of a transition into an effect. It is obvious that the afore-mentioned list is non-inclusive, and other effects may be controls, depending on the capability of the video mixer. It is also conceivable to store the position and size of a video signal that is inserted into another video signal in a configuration file of the mixer. The configuration file may be stored beforehand or may be updated during a presentation as required.

In another embodiment the general purpose computer has a video output connected to an input of the video mixer such that the mixer at least partly displays slides from the presentation software. The embodiment shows that the presentation software cannot only function as a control means for external video sources but can also provide one of the video signals. In fact, using the presentation software as a sequencer for event-triggered mixed effects applied on external video sources in a video mixer does not make full use of the capabilities of the presentation system.

In a development of this embodiment mix effects can also define a colour keying parameter set. If a presentation slide represents one of the video signals that are applied to the mixer and a colour key effect is selected, a further video signal will be inserted or mixed into an area on the presentation slide having a colour corresponding to the selected key colour.

In yet another embodiment the termination of an effect or a video insert or overlay is signalled from the video mixer. This feature can advantageously be used for returning to a regular presentation slide after the mixed-in video has been terminated.

The invention may further be characterised in that effects provided by the presentation software are complemented by or combined with effects from the video mixer. For example, if the presentation software allows for an effect involving rotating text calling up the rotating text may be considered as a trigger event. Upon calling up the rotating text the video mixer may slowly fade the rotating text from the presentation software into a video that is currently reproduced at the output of the video mixer. Effects provided by the video mixer as complementary effects are triggered by a linked effect of the presentation software. In this way the numerous effects that are provided by the presentation software may be multiplied by numerous effects that are provided by the video mixer, allowing for effects that hitherto were not possible.

A simple example for a combined effect uses colour keying in the video mixer: first, the key colour is communicated to the video mixer. The background colour of the computer is set to the key colour. A background video is reproduced and mixed, in the video mixer, with the video signal from the computer running the presentation software. As the background colour of the computer is the key colour, the background video is all that is present at the output of the video mixer. Then a presentation slide is called from the presentation software, using a transition such as "dissolve" or "opening Venetian blinds". In this kind of transition more and more a parts of the presentation slide are visible, either following a regular pattern or a statistically determined random pattern. Those parts of the presentation slide that do not have the key colour will be visible at the mixer's output instead of the background video signal.

In another example for combined effects a logo video can be blended into a presentation slide. In the inventive presentation system of this can be done in several ways: the position of the logo video as well as the size of it can be sent to the video mixer, and the video mixer inserts the logo video at the desired position. Sending the required parameters to the video mixer can be done prior to the presentation or as required, i.e. on the fly. It is also possible to use colour keying effects for the same purpose. In this case reproduction of the logo video may even be started in good time before reaching the point in the presentation at which the logo is to be visible. When the presenter wants the logo to be visible he or she creates a box or any other shape filled with the key colour which is called in the course of the presentation. Upon appearance of the key colour the logo video will take the place of the part of the presentation slide having the key colour. Again, it is possible to use effects provided by the presentation software for fading in the key colour box or the like.

The invention advantageously allows for controlling a complete presentation just from one place, dispensing with the need for an additional presentation operator. In an exemplary presentation, each slide or object in a presentation has actions associated with it, for example actions linked to showing or hiding objects or slides. The inventive extension to the presentation software allows for programming of commands which are sent to the video mixer and controls its state. The presenting person can create the presentation as usual. Then animation or effects are added for the slides, where needed. Whenever an effect is added for a slide or for an object within the slide additionally commands can be linked to that effect, which commands control actions of the video mixer. During the presentation the user controls the presentation as usual, advancing through slides or going back if necessary. If an effect which has a command for the video mixer associated to it is called during the presentation the video and audio part of the presentation will automatically be handled by the video mixer.

The invention advantageously simplifies the presentation workflow. A presenting person simply presents using the presentation software, following the sequence of the slides of the presentation, and the commands sent to the video mixer automatically control additional effects which are a linked with events in slides of the presentation.

The invention further solves the problem of the field or frame synchronised mixing or combining of video signals from a computer running a presentation software and external video sources. Presentation software cannot provide synchronisation with fields or frames of a video signal in the way video mixers can do. The invention further leaves the known path of a time-line which determines mixing and effects applied on video sources in a video mixer. Rather, the sequencing is transferred into an event-triggered sequence. While a time-line may be advantageous for content that can be fully pre-produced, an event-triggered sequence provides flexibility for live presentations, in particular if a presenter allows for discussions during the presentation or has to step back to a previously shown slide. In this case an additional operator who would control a mixer in order to show a video associated with the slide would have to know which video actually is associated and when to start the playback. The linked events of the inventive presentation system would automatically repeat the commands which are linked to the effects associated with the presentation slides.

In the following the invention will be described with reference to the attached drawings. In the drawings
- Fig. 1: shows a schematic block diagram of a presentation system according to the invention; and
- Fig. 2: shows an exemplary sequence of events in a presentation.

In the figures, same or similar elements are referenced using the same reference designators.

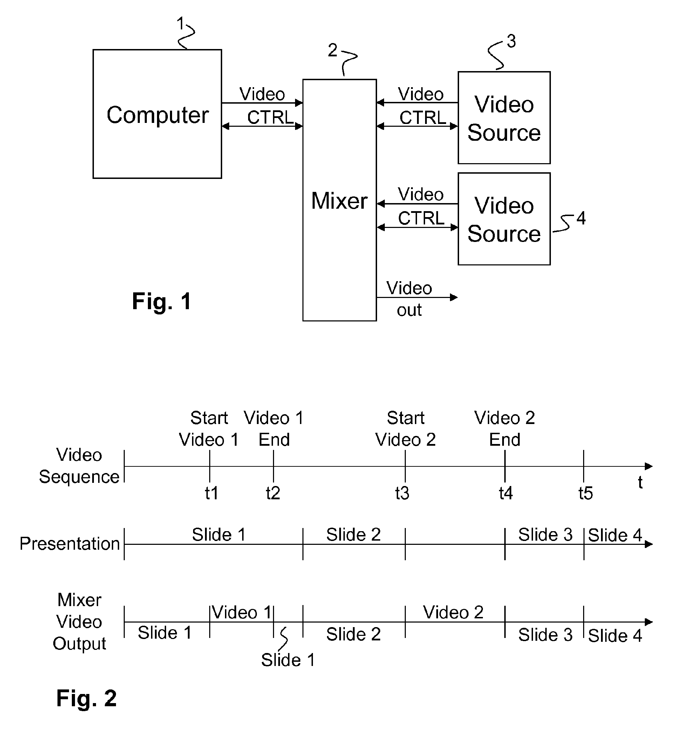

In figure 1 a schematic block diagram of a presentation system according to the invention is shown. A computer 1 is adapted to run a presentation software. A video output of the computer is connected to a video mixer 2. Further, a control connection CTRL between the computer 1 and the video mixer 2 is provided, via which control commands can be sent from the computer to the video mixer and via which the mixer can send status information to the computer. The status information may include, inter alia, information about the termination of a video effect or a video sequence. One or more video sources 3, 4 are connected to video inputs of the video mixer. The video sources 3, 4 are further connected to the video mixer via control interfaces CTRL. A video output provides a video signal to further circuitry (not shown).

It is also possible to control the operation of the video sources directly from the computer rather than from the mixer (not shown). In the setup shown in the figure, however, the mixer can act as a translator for translating the commands from the computer into specific commands for specific video source hardware.

Figure 2 shows an exemplary sequence of events in a presentation. The presentation sequence is shown in the middle line, naming slide numbers 1 to 4. During the presentation of slide 1 a short video sequence Video 1 is to be reproduced, beginning at t1 and ending at t2. At the end of slide 2 another short video sequence Video 2 is to be reproduced, beginning at t3 and ending at t4. In an ideal case the mixer's video output provides the video signal corresponding to slide 1 until t1. Thereafter the mixer's video output provides video signals corresponding to Video 1 until t2. Then, the video signal corresponding to slide 1 is present again at the output of the video mixer. At the end of slide 1 a transition to slide 2 is effected by the computer running the presentation software. At the end of slide 2, time instant t3, video signals corresponding to Video 2 are to be present at the output of the video mixer, and at the end of video sequence Video 2 a transition into slide 3 of the presentation is desired. Depending on how the video is inserted in the slides either a complete switchover from the computer's video output to one of the video sources is required whenever a video is to be reproduced, or the video is to be inserted at some place within the presentation. The nature of the effect or switch over, however, is not important for the invention. Rather, the time when the mixer switches over to a video from a presentation slide needs to be accurately timed.

If beginning and end of the video reproduction is predetermined by a time-line sequencer reproduction of the video would start irrespective of whether the presenter has reached the position of his presentation in which he or she would want the video reproduction to start. If, for any reason, the presenter reaches the appropriate position for the video reproduction to begin earlier or later than intended the presentation would be disturbed. In case an additional video and presentation slide operator is available the operator would have to be in contact with the presenter and wait for a keyword or a sign to switch over from the video signal corresponding to the presentation to the video sequence that is to be reproduced. For the operator this would require good knowledge of the overall presentation. In case the presenter would have to return to a slide that has been previously shown and which has a corresponding video sequence associated with it the operator would need to know which video is to be reproduced and at what time within the presentation. Further, the operator has to closely monitor the end of the video sequence in two switch back to the presentation in a timely manner.

In a presentation system according to the invention several events of the presentation software are linked with actions for controlling a video mixer that is connected to the computer running the presentation software. Usually presentations use effects for adding more and more information to slides, such as paragraphs or phrases appearing or disappearing and the like. In the inventive presentation system these effects can be used to issue commands to the video mixer for switching over to video production whenever the appropriate point in the presentation has been reached. Usually a presenter can advance through the presentation by using wireless pointing device that is coupled to the computer running the presentation software, by using a mouse couple to the computer or even by pressing keys on the keyboard of the computer. In more sophisticated systems the video mixer signals the end of the video sequence at switches back to the display of the presentation slide. Coupling effects of the presentation software with control commands for a video mixer allows for dispensing with a presentation slide and video operator. Further, jumping to and fro within the presentation will always produce repeatable results, because an additional video is linked to a certain point in the presentation rather than depending on how good the communication between the presenter and an operator is.

## Claims

1. Presentation system including:
- a video mixer, the video mixer having a plurality of video signal inputs and at least a video signal output;
- a computer adapted to run a presentation software;
- a control interface connecting the computer to the video mixer;
- a source of a video signal connected to an input of the video mixer;
**characterized in that**:
- the computer is adapted to detect the occurrence of events in the presentation software;
- a detected event is linked to a mix effect that can be performed by the video mixer; and
- the computer is adapted to transmit control commands and/or parameters to the video mixer upon detecting an event corresponding to a linked mix effect.

2. The presentation system of claim 1, wherein the detection of the occurrence of events in the presentation software is provided by a plug-in that monitors or polls an application programming interface (API) of the presentation software or an operating system under which the presentation software is running.

3. The presentation system of claim 1 or 2, wherein the computer has a video output connected to an input of the video mixer.

4. The presentation system of claim 1, 2 or 3, wherein the detectable events include entering a presentation slide, leaving a presentation slide, or operation of a real or virtual key or button.

5. The presentation system of any one of the preceding claims, wherein the parameters include the position and/or size of a video insert, transition effects, mix effects, luminance or chrominance keying, the duration of an effect or the duration of a transition into an effect.

6. The presentation system of any one of the preceding claims, wherein the termination of an effect or a video insert or overlay is signalled to the computer from the video mixer.

7. The presentation system of any one of the preceding claims, wherein the position and size of a video signal that is inserted into another video signal is stored in a configuration file of the mixer.

8. The presentation system of any one of the preceding claims, wherein effects provided by the presentation software are complemented by or combined with effects from the video mixer.

9. The presentation system of claim 8, wherein the complementing effects provided by the video mixer are triggered by that effect of the presentation software that triggered the video mixer effect.

10. Method for controlling a presentation system according to any one of claims 1 to 9 comprising the steps of:
- detecting events in a presentation software running on a computer;
- linking an event to a selected video processing that can be performed on video signals by a video mixer;
- upon detection of an event, transmitting commands and/or parameters for controlling processing operations according to the respective linked video processing to the video mixer.

11. The method of claim 10, wherein the detection of the occurrence of events in the presentation software is effected by monitoring or polling an application programming interface (API) of the presentation software or an operating system under which the presentation software is running.

12. The method of claim 10 or 11, further including receiving a signal from the video mixer indicating the termination of an effect or a video insert or overlay.

13. The method of claim 10, 11 or 12, including storing the position and size of a video signal that is inserted into another video signal in a configuration file of the mixer.

14. Data structure for a presentation system according to any one of claims 1 to 9, the structure including data to be reproduced within slides of a presentation, wherein the structure further includes meta-information for controlling a video mixer, the meta-information being coupled to specific elements within the data to be reproduced within slides of the presentation.
